# EUROPÄISCHE PATENTSCHRIFT

(11) **EP 3 325 358 B1**
(45) Veröffentlichungstag und Bekanntmachung des Hinweises auf die Patenterteilung: **25.05.2022**
(21) Anmeldenummer: 16731831.0
(22) Anmeldetag: 15.06.2016
(51) Int. Cl.: B65C 9/22, B65C 9/18

(54) **ETIKETTIERAGGREGAT UND VERFAHREN ZUM ETIKETTIEREN VON BEHÄLTERN**
LABELLING UNIT AND METHOD FOR LABELLING CONTAINERS
UNITÉ D'ÉTIQUETAGE ET PROCÉDÉ D'ÉTIQUETAGE DE RÉCIPIENTS

(30) Priorität: 24.07.2015 DE 102015214011
(43) Veröffentlichungstag der Anmeldung: 30.05.2018
(73) Patentinhaber: KRONES AG, 93073 Neutraubling (DE)
(72) Erfinder: HAFNER, Dieter, 93073 Neutraubling (DE); RATTENBERGER, Stephan, 93073 Neutraubling (DE); EICHHAMMER, Tobias, 93073 Neutraubling (DE)
(74) Vertreter: Grünecker Patent- und Rechtsanwälte PartG mbB
(86) Internationale Anmeldenummer: PCT/EP2016/063708
(87) Internationale Veröffentlichungsnummer: WO 2017/016741

(56) Entgegenhaltungen:
- DE-A1-102012 200 826
- GB-A- 2 072 135
- US-A- 2 545 292
- US-A- 2 936 921
- US-A- 3 864 187
- US-A- 3 867 233
- US-A- 4 354 887
- US-A- 4 632 721

## Beschreibung

Die Erfindung betrifft ein Etikettieraggregat gemäß dem Oberbegriff des Anspruchs 1 und ein entsprechendes Verfahren zum Etikettieren von Behältern.

Für das Etikettieren von Behältern, wie Getränkeflaschen oder dergleichen, ist es beispielsweise aus der DE 20 2012 003 268 U1 bekannt, blattförmige Etiketten von einem endlos von der Rolle bereitgestellten Etikettenband zunächst in einem Schneidwerk zu vereinzeln und an einem kontinuierlich rotierenden Vakuumtransferzylinder für die nachfolgende Übergabe der Etiketten an Behälter anzusaugen und während des Umlaufens zu beleimen. Für die seitlichen Anfangs- und Endbereiche der Etiketten sind hierzu schaltbare Saugleisten am Vakuumtransferzylinder ausgebildet. Diese sind aus einer äußeren Arbeitsstellung, in der die Saugleisten den von ihnen gehalten Etikettenabschnitt gegen ein in der Peripherie des Vakuumtransferzylinders vorhandenes Leimwerk führen, selektiv in eine innere Ausweichstellung schaltbar, in der sie das Leimwerk nicht berühren.

Insbesondere in Produktionsanlagen, bei denen die einzelnen Behandlungsmaschinen mechanisch fest miteinander verblockt ausgebildet sind, treten bei Fehlern stromaufwärts der Etikettiermaschine zwangsläufig Positionslücken im einlaufenden Behälterstrom auf. Da sich der Vakuumtransferzylinder im laufenden Betrieb kontinuierlich dreht, muss im Etikettenstrom an der der Positionslücke des Behälterstroms entsprechenden Förderposition ebenso eine Positionslücke erzeugt werden, indem der Vakuumtransferzylinder an der entsprechenden Stelle nicht mit einem Etikett bestückt wird. Folglich liegen die nicht bestückten Saugleisten beim Entlanglaufen am Leimwerk frei und sind in die innere Ausweichstellung zu schalten, um ein Beleimen der Saugleisten zu vermeiden.

Für das Schalten der Saugleisten ist vorzugsweise eine stationäre Schalteinheit mit verschiebbaren Steuerkurven unterhalb des Vakuumtransferzylinders vorhanden, die mit an die Saugleisten gekoppelten Steuerrollen zusammenwirken und diese in die innere Stellung schalten. In der Schalteinheit ist in der Regel ein Rollenmechanismus zum Schalten der Steuerkurven vorhanden. Dieser muss zum einen schnell schalten und zum anderen vergleichsweise hohe Schaltkräfte übertragen. Dies verursacht laute Schaltgeräusche und einen unerwünscht hohen Verschleiß des Schaltmechanismus. Ein Etikettieraggregat gemäß dem Oberbegriff des Anspruchs 1 und ein entsprechendes Verfahren gemäß dem Oberbegriff des Anspruchs 10 sind aus der US 2 936 921 A bekannt.

Es besteht daher Bedarf für ein diesbezüglich verbessertes Etikettieraggregat und ein Etikettierverfahren, das einen entsprechend verbesserten Maschinenbetrieb beim Auftreten von Positionslücken im Behälterstrom ermöglicht.

Die gestellte Aufgabe wird mit einem Etikettieraggregat nach Anspruch 1 gelöst. Demnach umfasst dieses: einen Vakuumtransferzylinder mit Saugleisten zum Ansaugen von Etiketten; ein im Bereich des Vakuumtransferzylinders ausgebildetes Leimwerk zum Beleimen der Etiketten; und eine stationäre Schalteinheit mit einer beweglichen Steuerkurve zum Schalten der Saugleisten in eine innere Stellung, in der die Saugleisten berührungslos an dem Leimwerk entlang laufen. Erfindungsgemäß umfasst die Schalteinheit einen Kniehebel zum Betätigen der Steuerkurve.

Die äußere Stellung kann als ordnungsgemäße Arbeitsstellung der Saugleisten verstanden werden. Die Saugleisten sind beispielsweise gegen einen Anschlag federnd in die äußere Stellung vorgespannt. In der äußeren Stellung führen die Saugleisten die angesaugten Etikettenbereiche gegen eine am Leimwerk vorhandene Leimwalze.

Die demgegenüber radial innen liegende innere Stellung kann als Ausweichstellung der Saugleisten verstanden werden. Unbestückte Saugleisten werden temporär wenigstens im Arbeitsbereich des Leimwerks in die Ausweichstellung geschaltet. Dies wird nachfolgend auch als Zurückschalten der Saugleisten bezeichnet.

Die Schalteinheit ist stationär bezogen auf die Drehbewegung des Vakuumtransferzylinders. Der Kniehebel ermöglicht ein gleichermaßen schnelles Zurückschalten und hohe Schaltkräfte bei vergleichsweise geringer bewegter Masse. Dies reduziert sowohl die Geräuschentwicklung als auch den Verschleiß beim Schalten. Der Kniehebel überträgt eine Schaltkraft von einem Schaltantrieb, beispielsweise einem pneumatischen Zylinder, auf die Steuerkurve oder auf eine mit dieser verbundene Tragstruktur, beispielsweise eine Trägerplatte.

Vorzugsweise ist die Schalteinheit derart ausgebildet, dass die Saugleisten durch Strecken des Kniehebels in die innere Stellung zurück geschaltet werden. Damit lassen sich hohe Betätigungskräfte am Ende der Streckbewegung mit vergleichsweise schneller Betätigungsbewegung am Anfang der Streckbewegung kombinieren.

Vorzugsweise sind endseitige Lagerpunkte des Kniehebels an gegenläufig verschiebbare Schlitten gekoppelt, und die Steuerkurve ist mit einem der endseitigen Lagerpunkte verbunden. Die Schlitten sind dann vorzugsweise horizontal verschiebbar. Die an einem mittleren Lagerpunkt des Kniehebels insbesondere in vertikaler Richtung einwirkende Schaltkraft lässt sich dann mittels Linearführung effizient in eine horizontale Schaltbewegung an die Steuerkurve übertragen. Außerdem lässt sich die Anzahl der beim Schalten zu bewegenden Bauteile, und damit die Massenträgheit des stationären Schaltmechanismus, minimieren. Dieser Schaltmechanismus besitzt zudem eine hohe mechanische Steifigkeit.

Die Steuerkurve ist zum Betätigen vorzugsweise verschiebbar gelagert, beispielsweise auf einer Trägerplatte. Eine Streckbewegung des Kniehebels lässt sich dann mittels Linearführung einfach auf die Steuerkurve übertragen. Es wäre jedoch prinzipiell auch eine schwenkbare Steuerkurve denkbar. Die Steuerkurve ist vorzugsweise in einer horizontalen Ebene beweglich.

Vorzugsweise sind am Vakuumtransferzylinder mit den Saugleisten verbundene Steuerrollen ausgebildet, um die Saugleisten beim Entlanglaufen an der Steuerkurve in die innere Stellung zu schalten. Dies ermöglicht eine verschleißarme Kraftübertragung auf die Saugleisten, um diese in ihre innere Stellung zurück zu schalten, insbesondere gegen eine in die äußere Stellung zwingende Rückstellkraft.

Vorzugsweise ist an der Schalteinheit ein mit dem Kniehebel verbundener elektrischer oder pneumatischer Schaltantrieb ausgebildet. Dieser ist insbesondere mit eine mittleren Lagerpunkt des Kniehebels verbunden. Dies ermöglicht eine schnelle und verschleißarme Betätigung des Kniehebels. Vorzugsweise ist der Schaltantrieb dann ein Linearantrieb, beispielsweise ein pneumatischer Zylinder mit Stößel, ein elektrischer Linearmotor oder dergleichen. Die Schaltbewegung des Schaltantriebs erfolgt vorzugsweise in vertikaler Richtung.

Vorzugsweise sind die Saugleisten paarweise für einen Anfangsbereich und einen Endbereich der Etiketten ausgebildet. Ein zwischen dem Anfangsbereich und dem Endbereich liegender Zwischenbereich der Etiketten wird dann zwar am Vakuumtransferzylinder angesaugt, jedoch nicht beleimt. Dies vereinfacht die nachfolgende Übergabe der Etiketten an Behälter und spart Leim ein, insbesondere für eine vollumfängliche Etikettierung der Behälter.

Vorzugsweise sind dann eine erste Schalteinheit für vordere Saugleisten zum Ansaugen der jeweiligen Anfangsbereiche und eine zweite Schalteinheit für hintere Saugleisten zum Ansaugen der jeweiligen Endbereiche ausgebildet. Dies ermöglicht ein gezieltes Zurückschalten einzelner Leisten und ausreichend lange Schaltintervalle, beispielsweise zwischen einer zurückzuschaltenden hinteren Schaltleiste und einer nachfolgenden vorderen Schaltleiste, die nicht zurückgeschaltet werden soll.

Vorzugsweise ist das Etikettieraggregat Bestandteil einer Etikettiermaschine, die ferner ein kontinuierlich drehbares Etikettierkarussell für Behälter und eine stromaufwärts des Etikettieraggregats ausgebildete Überwachungseinrichtung zum Feststellen von Positionslücken zwischen einlaufenden Behältern umfasst. Dies ermöglicht ein zuverlässiges Zurückschalten der Saugleisten.

Unter Positionslücken sind stromaufwärts, beispielsweise durch Fehlfunktionen oder gezieltes Ausleiten fehlerhafter Behälter, verursachte Lücken in einem ansonsten kontinuierlichen Behälterstrom. Insbesondere sind die Drehteller des Etikettierkarussells an den Positionslücken nicht mit einem Behälter bestückt, so dass an den Positionslücken keine Etiketten an Behälter übergeben werden können. Derartige Positionslücken treten insbesondere bei mechanisch miteinander verblockten Behandlungseinheiten auf, wie beispielsweise Blasmaschine, Füller und Etikettiermaschine.

Die gestellte Aufgabe wird ebenso mit einem Verfahren zum Etikettieren von Behältern nach Anspruch 10 gelöst. Demnach werden Etiketten selektiv an einen Vakuumtransferzylinder übergeben, an diesem mittels Saugleisten befestigt und von diesen mit einem Leimwerk in Kontakt gebracht. Ferner werden selektiv nicht mit Etiketten bestückte Saugleisten derart in eine innere Stellung zurückgeschaltet, dass die Saugleisten kontaktfrei an dem Leimwerk vorbeilaufen. Erfindungsgemäß wird eine Betätigungskraft für das Zurückschalten der Saugleisten mittels eines stationär gelagerten Kniehebels auf die Saugleisten übertragen.

Vorzugsweise wird der Etikettenzustrom zum Vakuumtransferzylinder korrespondierend mit einer Positionslücke im Behälterstrom unterbrochen. Dadurch werden ausgewählte Saugleisten nicht mit Etiketten bestückt und am Vakuumtransferzylinder eine korrespondierende Positionslücke im Etikettenstrom erzeugt.

Vorzugsweise erfolgt das Zurückschalten der Saugleisten bei einer kontinuierlichen Drehung des Vakuumtransferzylinders. Dies gewährleistet hohe Maschinenleistungen.

Vorzugsweise werden die Saugleisten durch Strecken des Kniehebels gegen eine die Saugleisten in eine äußere Stellung zurückstellende Federkraft zurückgeschaltet. Die Saugleisten sind zu diesem Zweck beispielsweise mit Druckfedern am Vakuumtransferzylinder nach außen vorgespannt und kehren selbsttätig in ihre normale äußere Arbeitsposition zurück.

Vorzugsweise wird eine stationär gelagerte Steuerkurve für das Zurückschalten der Saugleisten durch Strecken des Kniehebels verschoben. Dies minimiert die beim Schalten zu bewegende Masse, maximiert die Schaltgeschwindigkeit insgesamt und die Betätigungskraft am Ende der Schaltbewegung.

Vorzugsweise laufen an dem Vakuumtransferzylinder ausgebildete Steuerrollen beim Zurückschalten der Saugleisten an der Steuerkurve entlang. Dies vereinfacht ein temporäres Zurückschalten im Bereich des Leimwerks.

Vorzugsweise werden vordere Saugleisten zum Ansaugen eines Anfangsbereichs der Etiketten und hintere Schaltleisten zum Ansaugen eines Endbereichs der Etiketten paarweise mittels separater Steuerkurven zurückgeschaltet.

Vorzugsweise wird ferner ein Zustrom zu etikettierender Behälter hinsichtlich Positionslücken überwacht, und die Saugleisten werden in Abhängigkeit derart festgestellter Positionslücken selektiv zurückgeschaltet. Damit lassen sich korrespondierende Positionslücken im Etikettenstrom zuverlässig herstellen.

Vorzugsweise werden die Saugleisten im Bereich einer Positionslücke zwischen Etiketten zurückgeschaltet. Diese ist insbesondere mit einer Positionslücke zwischen Behältern synchronisiert.

Eine bevorzugte Ausführungsform der Erfindung ist den Zeichnungen dargestellt. Es zeigen:
- Fig. 1: eine schematische Draufsicht auf ein Etikettieraggregat;
- Fig. 2: eine Ansicht eines Vakuumtransferzylinders von unten;
- Fig. 3: eine Schrägansicht von zwei Schalteinheiten; und
- Fig. 4: einen Längsschnitt durch eine Schalteinheit in zwei Schaltpositionen.

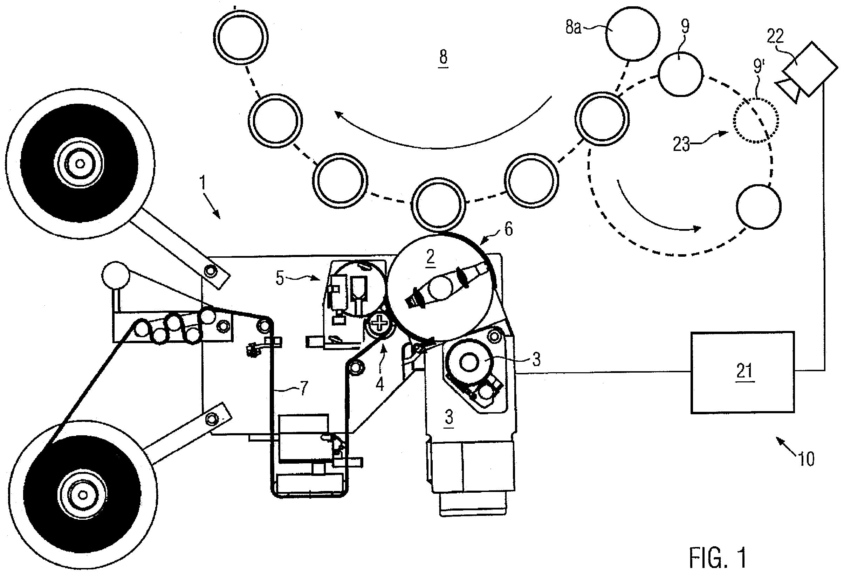

Wie die Fig. 1 erkennen lässt, umfasst das Etikettieraggregat 1 in einer bevorzugten Ausführungsform einen Vakuumtransferzylinder 2 und ein Leimwerk 3, das stationär in der Peripherie des Vakuumtransferzylinders 2 ausgebildet ist. Schematisch angedeutet sind ferner eine Förderwalze 4 und ein Schneidwerk 5, mit dem Etiketten 6 aus einem auf bekannte Weise endlos von der Rolle bereitgestellten Etikettenband 7 vereinzelt und an den Vakuumtransferzylinder 2 übergeben werden. Die Etiketten 6 werden an dem Vakuumtransferzylinder 2 auf nachfolgend beschriebene Weise angesaugt und bei kontinuierlicher Etikettierung nacheinander zur Beleimung mit einer an dem Leimwerk 3 ausgebildeten Leimwalze 3a in Kontakt gebracht. Die beleimten Etiketten 6 werden anschließend im Bereich eines kontinuierlich drehbaren Behälterkarussells 8 an zu etikettierende Behälter 9 auf an sich bekannte Weise übergeben.

Das Etikettieraggregat 1 und das Etikettierkarussell 8 sind Bestandteil einer Etikettiermaschine 10, die beispielsweise für die vollumfängliche Etikettierung der auf Drehtellern 8a zentriert eingespannten Behälter 9 in einem seitlichen Rumpfbereich ausgebildet ist.

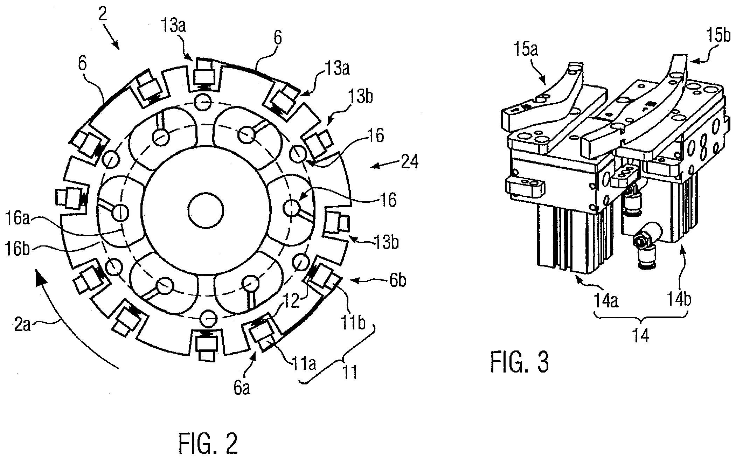

Wie die Fig. 2 erkennen lässt, umfasst der Vakuumtransferzylinder 2 Saugleisten 11, die beispielsweise paarweise in Form vorderer Saugleisten 11a und hinterer Saugleisten 11b für vordere bzw. hintere Abschnitte 6a, 6b der Etiketten 6 ausgebildet sind. Alle Saugleisten 11 werden im normalen Etikettierungsbetrieb mit Hilfe von Druckfedern 12 oder dergleichen in einer äußeren Stellung 13a, in der die Saugleisten 11 die jeweils gehaltenen Abschnitte 6a, 6b an die Leimwalze 3a führen.

Die Saugleisten 11 lassen sich selektiv in eine innere Stellung 13b zurückschalten, in der die Saugleisten 11 jeweils kontaktfrei an der Leimwalze 3a vorbei laufen. Für das aktive Zurückschalten der Saugleisten 11 ist wenigstens eine stationäre Schalteinheit 14 mit einer daran verschiebbaren Steuerkurve 15 ausgebildet.

Die wenigstens eine Steuerkurve 15 lässt sich vorzugsweise durch seitliches Verschieben betätigen, so dass an dem Vakuumtransferzylinder 2 befestigte Steuerrollen 16 beim Entlanglaufen an der Steuerkurve 15 eine Schaltbewegung ausführen, die sie mechanisch an jeweils eine antriebtechnisch daran gekoppelte Saugleiste 11 übertragen.

Wie die Figur 3 erkennen lässt, sind vorzugsweise eine erste Schalteinheit 14a mit einer ersten Steuerkurve 15a zum Schalten der vorderen Saugleisten 11a und eine zweite Schalteinheit 14b mit einer zweiten Steuerkurve 15b zum Schalten der hinteren Saugleisten 11b ausgebildet. Die Steuerrollen 16 für die vorderen Saugleisten 11a und die Steuerrollen 16 für die hinteren Saugleisten 11b laufen dabei vorzugsweise entlang (schematisch angedeuteter) getrennter Teilkreise 16a, 16b um.

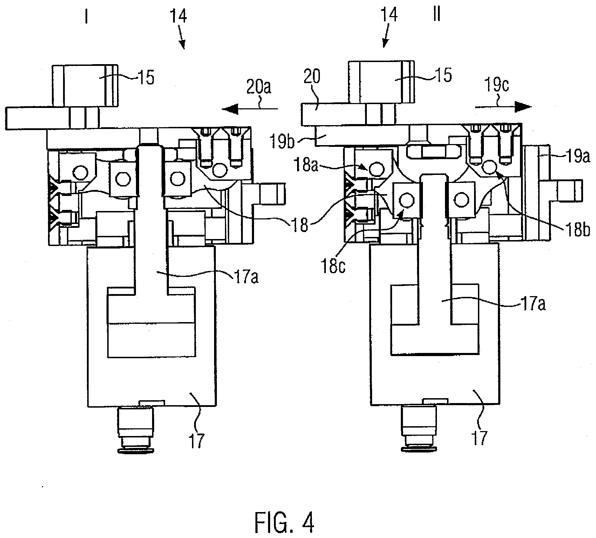

Wie die Figur 4 erkennen lässt, umfasst die wenigstens eine Schalteinheit 14 vorzugsweise einen elektromagnetischen oder hydraulischen Schaltantrieb 17 und einen von diesem angetriebenen Kniehebel 18, der mit seinen endseitigen Lagerpunkten 18a, 18b an gegenläufig beweglichen Schlitten 19a, 19b befestigt ist. Ein erster Schlitten 19a ist mit einer Trägerplatte 20 verbunden, die zur Montage der Steuerkurven 15 dient. Der erste Schlitten 19a führt beim Zurückschalten der Saugleisten 11 gemeinsam mit der Trägerplatte 20 eine (schematisch angedeutete) Linearbewegung 20a aus. Ein zweiter Schlitten 19b führt dabei eine gegenläufige Linearbewegung 19c aus.

Beide Schlitten 19a, 19b sind auf bekannte Weise in der Schalteinheit 14 linear geführt. Auf diese Weise wird die Schaltbewegung des endseitigen Lagerpunkts 18a unmittelbar auf die Trägerplatte 20 und die Steuerkurve 15 übertragen. Dies minimiert die beim Schalten zu bewegende Masse. Prinzipiell wäre es allerdings auch denkbar, die Schaltbewegung des endseitigen Lagerpunkts 18a mittelbar in eine Schwenkbewegung der Steuerkurve 15 umzusetzen.

Die Figur 4 verdeutlicht an der Position I, dass der Kniehebel 18 beim Zurückschalten der Saugleisten 11 in ihre innere Stellung 13b gestreckt wird. Entsprechend verdeutlicht die Position II der Figur 4, dass der Kniehebel 18 beim Vorschalten der Saugleisten 11 in ihre äußere Stellung 13a zunehmend abgewinkelt wird. Aus dem Wirkungsprinzip des Kniehebels folgt dann, dass sich der endseitige Lagerpunkt 18a, und damit die Steuerkurve 15, beim Zurückschalten zuerst relativ schnell bewegt, und dass die Betätigungskraft am endseitigen Lagerpunkt 18a mit zunehmend gestrecktem Kniehebel 18 zunimmt. Somit lassen sich die Saugleisten 11 gleichermaßen schnell und zuverlässig gegen eine die Saugleisten 11 in die äußere Stellung 13a rückstellende Federkraft oder dergleichen in die innere Stellung 13b schalten.

Der Schaltantrieb 17 ist vorzugsweise als Linearantrieb ausgebildet mit einem Stößel 17a oder dergleichen, der an einen mittleren Lagerpunkt 18c des Kniehebels 18 antriebstechnisch gekoppelt ist. Der Schaltantrieb 17 wird dann von einer (schematisch angedeuteten) Steuereinheit 21 zum jeweils aktiven Strecken oder Abwinkeln des Kniehebels 18 angesteuert. Prinzipiell wäre aber es aber auch möglich, den mittleren Lagerpunkt 18c mittels einer Pleuelstange oder dergleichen an eine Abtriebswelle des Schaltantriebs zu koppeln (nicht dargestellt).

Die Steuereinheit 21 ist mit einer stromaufwärts des Vakuumtransferzylinders 2 ausgebildeten Überwachungseinheit 22 verbunden, die den Behälterstrom überwacht und beim Auftreten von Positionslücken 23 im Behälterstrom (in der Figur 1 durch einen gepunktet gezeichneten, fehlenden Behälter 9' angedeutet) entsprechende Mess- oder Steuersignale an die Steuereinheit 21 übermittelt. Diese wiederum erzeugt selektiv korrespondierende Positionslücken 24 zwischen den am Vakuumtransferzylinder 2 transportierten Etiketten 6, beispielsweise durch Ansteuerung der Förderwalze 4 und des Schneidwerks 5, und veranlasst die wenigstens eine Schalteinheit 14 zum Zurückschalten der an den selektiven Positionslücken 24 nicht mit Etiketten 6 bestückten Saugleisten 11.

Mit dem Etikettieraggregat 1 lässt sich beispielsweise wie folgt arbeiten:
Im normalen Etikettierungsbetrieb des Etikettieraggregats 1 wird das Etikettenband 7 vorzugsweise kontinuierlich mit Hilfe der Förderwalze 4 dem Schneidwerk 5 zugeführt und darin zu den Etiketten 6 vereinzelt. Die Etiketten 6 werden von dem Schneidwerk 5 an den sich kontinuierlich in einer Richtung 2a drehenden Vakuumtransferzylinder 2 übergeben. Hierbei wird jedes Etikett 6 vorzugsweise an seinem vorderen Ende 6a und an seinem hinteren Ende 6b von einer vorderen Saugleiste 11a und einer hinteren Saugleiste 11b sowie einem jeweils dazwischen liegenden Bereich angesaugt. Die Saugleisten 11 befinden sich dabei in ihrer normalen äußeren Stellung 12, so dass die vorderen und hinteren Endbereiche 6a, 6b jeweils mit der Leimwalze 3a in Kontakt gebracht werden und auf diese Weise mit Heißleim oder dergleichen beschichtet werden.

Die Drehgeschwindigkeit des Vakuumtransferzylinders 2 ist auf an sich bekannte Weise mit der Transportgeschwindigkeit der Behälter 9 auf dem sich kontinuierlich drehenden Etikettierkarussell 8 synchronisiert, so dass an jeden Behälter 9 je ein Etikett 6 übergeben wird. Hierbei werden die Behälter 9 auf bekannte Weise auf Drehtellern 8a stehend gedreht und die Etiketten 6 insbesondere vollumfänglich auf den Behältern 9 aufgewickelt und an ihren beleimten Endbereichen 6a, 6b aufgeklebt.

Der einlaufende Strom von Behältern 9 wird kontinuierlich mit Hilfe der Überwachungseinheit 22 hinsichtlich des Auftretens von Positionslücken 23, also hinsichtlich fehlender Behälter 9', untersucht, beispielsweise durch optische Abtastung. Wird eine Positionslücke 23 im Behälterstrom festgestellt, so sendet die Überwachungseinrichtung 22 ein geeignetes Signal an die Steuereinheit 21, die beispielsweise die Förderwalze 4 veranlasst, den Vorschub des Etikettenbands 7 zu unterbrechen. Folglich kann das Schneidwerk 5 vorübergehend kein Etikett 6 an den sich kontinuierlich weiterdrehenden Vakuumtransferzylinder 2 übergeben. Es wird somit eine mit der Positionslücke 23 im Behälterstrom korrespondierende Positionslücke 24 im Etikettenstrom erzeugt.

Um ein Beleimen der im Bereich der korrespondierenden Positionslücke 24 nicht mit einem Etikett 6 bestückten Saugleisten 11 am Leimwerk 3 zu verhindern, werden die betroffenen Saugleisten 11 aktiv durch Ansteuern der Schalteinheiten 14 unter Streckung des Kniehebels 18 und Verschieben der Steuerkurven 15 mittels der daran entlang laufenden Steuerrollen 16 in ihre innere Stellung 13b zurückgeschaltet.

Sobald die der Positionslücke 24 zugeordneten Steuerrollen 16 den Bereich der Steuerkurven 15, und damit den Arbeitsbereich des Leimwerks 3, verlassen haben, kehren die zurückgeschalteten Saugleisten 11 mittels Federspannung oder dergleichen selbsttätig in ihre äußere Stellung 13a zurück.

Am Ende der Positionslücke 24 werden die Steuerkurven 15 mit Hilfe der Schalteinheiten 14 durch Abwinkeln des Kniehebels 18 so geschaltet, dass die Steuerrollen 16 wirkungslos vorbei laufen. Folglich bleiben nachfolgende Saugleisten 11 in ihrer normalen Arbeitsstellung, also in der äußeren Stellung 13a, so dass angesaugte Etiketten 6 ordnungsgemäß beleimt und an die Behälter 9 übergeben werden.

Die Anzahl der beschriebenen Saugleisten 11, Schalteinheiten 14 und Steuerkurven 15 ist beispielhaft und könnte an benötigte Maschinenleistungen Vorrichtungsabmessungen oder dergleichen angepasst werden, ohne das zu Grunde liegende Schaltprinzip mittels Kniehebel 18 zu verlassen.

Der Transport des Etikettenbands 7, das Vereinzeln zu Etiketten 6 und deren Transport und Übergabe am Vakuumzylinder 2 kann hierbei in bekannter Weise erfolgen.

## Patentansprüche

1. Etikettieraggregat (1), umfassend:
- einen Vakuumtransferzylinder (2) mit Saugleisten (11) zum Ansaugen von Etiketten (6);
- ein neben dem Vakuumtransferzylinder ausgebildetes Leimwerk (3) zum Beleimen der Etiketten; und
- eine stationäre Schalteinheit (14) mit einer beweglichen Steuerkurve (15) zum Schalten der Saugleisten in eine innere Stellung (13b), in der die Saugleisten kontaktfrei an dem Leimwerk entlang laufen,
**dadurch gekennzeichnet, dass**
die Schalteinheit einen Kniehebel (18) zum Betätigen der Steuerkurve umfasst.

2. Etikettieraggregat nach Anspruch 1, wobei die Schalteinheit (14) derart ausgebildet ist, dass sie die Saugleisten (11) durch Strecken des Kniehebels (18) in die innere Stellung (13b) zurückschaltet.

3. Etikettieraggregat nach Anspruch 1 oder 2, wobei endseitige Lagerpunkte (18a, 18b) des Kniehebels (18) an gegenläufig verschiebbare Schlitten (19a, 19b) gekoppelt sind und die Steuerkurve (15) mit einem der endseitigen Lagerpunkte verbunden ist.

4. Etikettieraggregat nach einem der vorigen Ansprüche, wobei die Steuerkurve (15) zum Betätigen verschiebbar gelagert ist.

5. Etikettieraggregat nach wenigstens einem der vorigen Ansprüche, wobei am Vakuumtransferzylinder (2) mit den Saugleisten (11) verbundene Steuerrollen (16) ausgebildet sind, um die Saugleisten beim Entlanglaufen an der Steuerkurve (15) in die innere Stellung (13b) zu schalten.

6. Etikettieraggregat nach wenigstens einem der vorigen Ansprüche, wobei an der Schalteinheit (14) ein mit dem Kniehebel (18), insbesondere mit einem mittleren Lagerpunkt (18c) des Kniehebels (18), verbundener elektrischer oder pneumatischer Schaltantrieb (17) ausgebildet ist.

7. Etikettieraggregat nach wenigstens einem der vorigen Ansprüche, wobei die Saugleisten (11) paarweise für einen Anfangsbereich (6a) und einen Endbereich (6b) der Etiketten (6) ausgebildet sind.

8. Etikettieraggregat nach Anspruch 7, wobei eine erste Schalteinheit (14a) für vordere Saugleisten (11a) zum Ansaugen des Anfangsbereichs (6a) und eine zweite Schalteinheit (14b) für hintere Saugleisten (11b) zum Ansaugen des Endbereichs (6b) ausgebildet sind.

9. Etikettiermaschine (10) mit dem Etikettieraggregat (1) nach wenigstens einem der vorigen Ansprüche, einem kontinuierlich drehbaren Etikettierkarussell (8) für Behälter (9) und einer stromaufwärts des Etikettieraggregats ausgebildeten Überwachungseinrichtung (22) zum Feststellen von Positionslücken (23) zwischen einlaufenden Behältern.

10. Verfahren zum Etikettieren von Behältern (9), bei dem Etiketten (6) an einen Vakuumtransferzylinder (2) übergeben, dort mittels Saugleisten (11) befestigt und von letzteren mit einem Leimwerk (3) in Kontakt gebracht werden, wobei selektiv nicht mit Etiketten bestückte Saugleisten derart in eine innere Stellung (13b) zurückgeschaltet werden, dass die Saugleisten kontaktfrei an dem Leimwerk vorbeilaufen, **dadurch gekennzeichnet, dass** eine Betätigungskraft für das Zurückschalten der Saugleisten mittels eines stationär gelagerten Kniehebels (18) auf die Saugleisten übertragen wird.

11. Verfahren nach Anspruch 10, wobei der Zustrom der Etiketten (6) zum Vakuumtransferzylinder (2) korrespondierend mit einer Positionslücke (23) im Behälterstrom unterbrochen wird.

12. Verfahren nach Anspruch 10 oder 11, wobei die Saugleisten (11) bei kontinuierlicher Drehung des Vakuumtransferzylinders (2) zurück geschaltet werden.

13. Verfahren nach einem der Ansprüche 10 bis 12, wobei die Saugleisten durch Strecken des Kniehebels (18) gegen eine die Saugleisten (11) in eine äußere Stellung (13a) zurückstellende Federkraft zurückgeschaltet werden.

14. Verfahren nach wenigstens einem der Ansprüche 10 bis 13, wobei ferner ein Zustrom zu etikettierender Behälter hinsichtlich Positionslücken (23) überwacht wird und die Saugleisten (11) in Abhängigkeit derart festgestellter Positionslücken selektiv zurückgeschaltet werden.

15. Verfahren nach wenigstens einem der Ansprüche 10 bis 14, wobei die Saugleisten (11) im Bereich einer Positionslücke (24) zwischen Etiketten (6) zurückgeschaltet werden.

## Claims

1. Labeling unit (1), comprising:
- a vacuum transfer cylinder (2) with suction bars (11) for suctioning labels (6);
- a gluing unit (3) formed adjacent to said vacuum transfer cylinder for applying glue onto said labels; and
- a stationary switching unit (14) having a movable operating cam (15) for switching said suction bars to an inner position (13b) in which said suction bars pass said gluing unit without contacting it,
**characterized in that**
said switching unit comprises a toggle lever (18) for actuating said operating cam.

2. Labeling unit according to claim 1, where said switching unit (14) is configured such that it switches back said suction bars (11) by extending said toggle lever (18) to said inner position (13b).

3. Labeling unit according to claim 1 or 2, where end-side mounting points (18a, 18b) of said toggle lever (18) are coupled to oppositely displaceable carriages (19a, 19b), and said operating cam (15) is connected to one of said end-side mounting points.

4. Labeling unit according to one of the preceding claims, where said operating cam (15) is displaceably mounted for actuation.

5. Labeling unit according to at least one of the preceding claims, where control rollers (16) connected to said suction bars (11) are formed on said vacuum transfer cylinder (2) in order to switch said suction bars to the inner position (13b) when they pass said operating cam (15).

6. Labeling unit according to at least one of the preceding claims, where an electrical or pneumatic switching drive (17), connected to said toggle lever (18), in particular, with a center mounting point (18c) of said toggle lever (18), is formed on said switching unit (14).

7. Labeling unit according to at least one of the preceding claims, where said suction bars (11) are formed in pairs for a front area (6a) and an end area (6b) of said labels (6).

8. Labeling unit according to claim 7, where a first switching unit (14a) for leading suction bars (11a) for suctioning said front area (6a) and a second switching unit (14b) for trailing suction bars (11b) for suctioning said end area (6b) are formed.

9. Labeling machine (10) with said labeling unit (1) according to at least one of the preceding claims, a continuously rotatable labeling carousel (8) for containers (9), and a monitoring device (22) formed upstream of said labeling unit for detecting position gaps (23) between incoming containers.

10. Method for labeling containers (9), in which labels (6) are transferred to a vacuum transfer cylinder (2), attached there by way of suction bars (11) and by the latter brought into contact with a gluing unit (3), where suction bars selectively not being charged with labels are switched back to an inner position (13b) in such a manner that said suction bars pass said gluing unit without contacting it, **characterized in that** an actuating force for switching back said suction bars is transferred to said the suction bars by way of a stationarily mounted toggle lever (18).

11. Method according to claim 10, where the inflow of said labels (6) to said vacuum transfer cylinder (2) is interrupted in correspondence with a position gap (23) in the inflow of containers.

12. Method according to claim 10 or 11, where said suction bars (11) are switched back during the continuous rotation of said vacuum transfer cylinder (2).

13. Method according to one of the claims 10 to 12, where said suction bars are switched back by extending said toggle lever (18) against a spring force that returns said suction bars (11) to an outer position (13a).

14. Method according to at least one of claims 10 to 13, where an inflow of containers to be labeled is further monitored for position gaps (23), and said suction bars (11) are selectively switched back in response to position gaps thus detected.

15. Method according to at least one of claims 10 to 14, where said suction bars (11) are switched back in the region of a position gap (24) between labels (6).

## Revendications

1. Unité d'étiquetage (1), comprenant :
- un cylindre de transfert sous vide (2) avec des barres d'aspiration (11) pour aspirer des étiquettes (6) ;
- un dispositif d'encollage (3) agencé à côté du cylindre de transfert sous vide pour encoller les étiquettes ; et
- une unité de commutation stationnaire (14) avec une came de commande mobile (15) pour commuter les barres d'aspiration dans une position intérieure (13b), dans laquelle les barres d'aspiration se déplacent sans contact le long du dispositif d'encollage,
**caractérisé en ce que**
l'unité de commutation comprend un levier de genouillère (18) pour actionner la came de commande.

2. Unité d'étiquetage selon la revendication 1, dans laquelle l'unité de commutation (14) est conçue de telle sorte qu'elle ramène les barres d'aspiration (11) dans la position intérieure (13b) par extension du levier à genouillère (18).

3. Unité d'étiquetage selon la revendication 1 ou 2, dans lequel des points d'appui (18a, 18b) situés aux extrémités du levier de genouillère (18) sont couplés à des chariots (19a, 19b) pouvant être déplacés en sens inverse et la came de commande (15) est reliée à l'un des points d'appui situés aux extrémités.

4. Unité d'étiquetage selon l'une des revendications précédentes, dans lequel la came de commande (15) est montée de manière à pouvoir être déplacée pour l'actionnement.

5. Unité d'étiquetage selon au moins l'une des revendications précédentes, dans lequel des galets de commande (16) reliés aux barres d'aspiration (11) sont agencés sur le cylindre de transfert à vide (2), afin de commuter les barres d'aspiration dans la position intérieure (13b) lors du passage le long de la came de commande (15).

6. Unité d'étiquetage selon au moins l'une des revendications précédentes, dans lequel un entraînement de commutation électrique ou pneumatique (17) relié au levier à genouillère (18), en particulier à un point d'appui central (18c) du levier à genouillère (18), est agencé sur l'unité de commutation (14).

7. Unité d'étiquetage selon au moins l'une des revendications précédentes, dans lequel les barres d'aspiration (11) sont agencées par paires pour une zone de début (6a) et une zone de fin (6b) des étiquettes (6).

8. Unité d'étiquetage selon la revendication 7, dans lequel une première unité de commutation (14a) est agencée pour des barres d'aspiration avant (11a) destinées à aspirer la zone initiale (6a) et une deuxième unité de commutation (14b) est conçue pour des barres d'aspiration arrière (11b) destinées à aspirer la zone finale (6b).

9. Étiqueteuse (10) avec l'unité d'étiquetage (1) selon au moins l'une des revendications précédentes, un carrousel d'étiquetage (8) pouvant tourner en continu pour des récipients (9) et un dispositif de surveillance (22) agencé en amont de l'unité d'étiquetage pour détecter des écarts de position (23) entre des récipients entrants.

10. Procédé d'étiquetage de récipients (9), dans lequel des étiquettes (6) sont transmises à un cylindre de transfert à vide (2), y sont fixées au moyen de barres d'aspiration (11) et sont amenées par ces dernières en contact avec un dispositif d'encollage (3), les barres d'aspiration non couvertes d'étiquettes étant sélectivement ramenées dans une position intérieure (13b), de manière que les barres d'aspiration passent sans contact devant le dispositif d'encollage, **caractérisé en ce qu'**une force d'actionnement pour le retour des barres d'aspiration est transmise aux barres d'aspiration au moyen d'un levier à genouillère (18) monté de manière stationnaire.

11. Procédé selon la revendication 10, dans lequel l'arrivée des étiquettes (6) au cylindre de transfert sous vide (2) est interrompue selon un écart de positionnement (23) dans le flux récipients.

12. Procédé selon la revendication 10 ou 11, dans lequel les barres d'aspiration (11) sont rebasculées lors de la rotation continue du cylindre de transfert sous vide (2).

13. Procédé selon l'une des revendications 10 à 12, dans lequel les barres d'aspiration sont rebasculées en étendant le levier à genouillère (18) à l'encontre d'une force de ressort qui fait reculer les barres d'aspiration (11) dans une position extérieure (13a).

14. Procédé selon au moins l'une des revendications 10 à 13, dans lequel, en outre, une arrivée de récipients à étiqueter est surveillé par rapport à des écarts de positionnement (23), et les barres d'aspiration (11) sont sélectivement reculées selon des écarts de positionnement ainsi constatées.

15. Procédé selon au moins l'une des revendications 10 à 14, dans lequel les barres d'aspiration (11) sont reculées dans la zone d'un écart de positionnement (24) entre les étiquettes (6).
